# EUROPEAN PATENT APPLICATION

(11) **EP 4 425 595 A1**
(43) Date of publication of application: **04.09.2024**
(21) Application number: 23305283.6
(22) Date of filing: 03.03.2023
(51) Int. Cl.: H01M 4/13, C01F 17/36, C01G 9/00, C01G 15/00, C01G 27/00, C03C 10/16, H01B 1/06, H01M 4/62, H01M 10/052, H01M 10/0562

(54) **SOLID HALIDE ELECTROLYTE**

(71) Applicant: Saint-Gobain Ceramics & Plastics Inc., Worcester, Massachusetts 01615 (US)
(72) Inventor: MARCHANDIER, Thomas, Aubervilliers 93300 (FR); OUSPENSKI, Vladimir, 93300 Aubervilliers (FR); VETRO, Rudy, 93300 Aubervilliers (FR)
(74) Representative: Saint-Gobain Recherche

(57) **Abstract**

The present invention relates to a solid electrolyte material of formula (I) M₃Me₁₋ₓlnₓCl_{6-y}Br_{y} wherein M comprises an alkali metal element, in particular including Li, Me is a trivalent element chosen from Y, Al, Sc, La, Ce, Gd, Er and Yb, x is greater than 0 and lower than 0.50, and y is greater than 1.0 and lower than 3.0. The invention further concerns preparations processes for obtaining said solid electrolyte material and a battery wherein at least one of the cathode, the anode and the electrolyte layer comprises said solid electrolyte material.

## Description

### Technical field

The present invention belongs to the field of all-solid-state rechargeable batteries (ASSB) and in particular relates to a new composition of solid electrolyte.

### Technical background

ASSBs are of particular interest as a substitute to traditional Li-Ion batteries, especially since they raise fewer safety concerns and have higher capacities.

To obtain an ASSB, a solid electrolyte is used instead of the liquid electrolytes found in Li-Ion batteries. ASSBs also use for example Li-metal anodes and high energy NMC cathode particles, said particles being incorporated into the solid-state electrolyte.

Such solid electrolyte may be, for example chosen from lithium thiophosphate (β-Li₃PS₄, LPS), argyrodite (Li₆PS₅Cl) such as described in H.J. Deiseroth, et al. "Li6PS5X: a class of crystalline Li-rich solids with an unusually high Li+ mobility." Angew. Chem. Int. Ed., 47 (2008), pp. 755-758 and halides, for example Li₃InCl₆, such as described in X. Li et al. "Air-stable Li3InCl6 electrolyte with high voltage compatibility for all-solid-state batteries." Energy Environ. Sci., 2019,12, pp. 2665-267; Schmidt, M. O. et al. "Zur Kristallstruktur von Li3InCl6." Zeitschrift für Anorg. und Allg. Chemie 1999, 625 (4), 539-540; and G.Meyer, et al. "Handbook on the Physics & Chemistry of Rare Earths", V.28, chapter 177, 2000 Elsevier Sci.

However, the main drawback of these compounds is their chemical and electro-chemical interactions with electrode materials.

Halide solid electrolytes are of particular interest since they display good ionic conductivity (above 2 mS/cm), high electro-chemical stability against oxidation at cathode side and a better compactibility (deformability) than other solid-state inorganic electrolytes.

However, halide solid electrolytes, while demonstrating good electrochemical resistance to high energy NMC cathode, also present the drawback of being highly hygroscopic. As such, they are unstable in presence of even traces of water, which leads to a very complicated use at the industrial scale.

Furthermore, in the application EP 3 736 830 A1, it is demonstrated that a halide solid electrolyte of formula Li₃YBr₆₋ₓClₓ with 0.5 ≤ x ≤ 5 has a higher ionic conductivity than usual halide solid electrolytes Li₃YCl₆, Li₃YBr₆ and Li₃InBr₆. This last electrolyte being in particular very poor in ionic conductivity and presenting a phase transition at 55 °C.

The application EP 3 965 199 A1 is interested in providing halide solid electrolytes with a high ionic conductivity and improved stability in air and water. Amongst the many candidates presented, this application discloses halide solid electrolytes of the formula Li₃Y_{1-d}In_{d}Cl₆ and specifically Li₃In_{0.8}Y_{0.2}Cl₆ as well as Li₃In_{0.2}Y_{0.8}Cl₆. However, this document presents the degree of crystallinity of a halide solid electrolyte as responsible for the improvement in stability and ionic conductivity. Nothing in this document points towards a specific halide solid electrolyte chemistry.

### Summary of the invention

### Technical problem

The present application aims at providing novel halide solid electrolytes with high ionic conductivity and improved stability. In particular, the halide solid electrolytes herein provided are less hygroscopic than known halide solid electrolytes.

To this end, a halide solid electrolyte of general formula M₃Me₁₋ₓInₓCl_{6-y}Br_{y} wherein M comprises an alkali metal element and Me is a trivalent element chosen from Y, Al, Sc, La, Ce, Gd, Er and Yb, was investigated.

However, while solving this technical problem, the inventors surprisingly discovered that only some mixtures supposedly leading to this general formula yielded solid solutions, i.e. pure compounds.

### Solution to the technical problem

Thus, according to a first aspect, the present invention relates to a solid electrolyte material of formula (I):

MₛMe₁₋ₓInₓCl_{6-y}Br_{y} (I)

wherein
M comprises an alkali metal element, in particular including Li,
Me is a trivalent element chosen from Y, Al, Sc, La, Ce, Gd, Er and Yb,
x is greater than 0 and lower than 0.50, and
y is greater than 1.0 and lower than 3.0.

According to a second aspect, the present invention also concerns a preparation process for the solid electrolyte material according to the invention comprising:
- in a medium chosen from aqueous, alcoholic or other polar molecule liquid solution, mixing precursors including ammonium halide, NH₄Cl, NH₄Br, one or more Me metal compounds, one or more In metal compounds, one or more M metal compounds, in stoichiometric proportions, and
- heating the resulting mixture at a temperature ranging from 200 °C to 800 °C, in particular from 400 °C to 700 °C and preferably from 500 °C to 650 °C, for a duration ranging from 1 hour to 100 hours, in particular from 10 hours to 80 hours and preferably from 20 hours to 60 hours.

According to a third aspect, the present invention concerns another preparation process for the solid electrolyte material according to the invention comprising:
- in a medium chosen from aqueous, alcoholic or other polar molecule liquid solution, mixing precursors including ammonium halide, NH₄Cl, NH₄Br, one or more Me metal compounds, one or more In metal compounds, one or more M metal compounds, in stoichiometric proportions, and
- drying the mixture to obtain a solid-state solution of formula (NH₄)₃M₃Me₁₋ₓInₓCl_{6-y+3z}Br_{y+3z'}, wherein z + z' = 1, and
- heating the solid-state solution at a temperature ranging from 150 °C to 800 °C, in particular from 250 °C to 700 °C and preferably from 300 °C to 650 °C, for a duration ranging from 15 minutes to 12 hours, in particular from 30 minutes to 10 hours and preferably from 1 hour to 5 hours.

According to a fourth aspect, the present invention further pertains to a battery, in particular an all-solid-state battery, comprising a cathode, an anode and at least one electrolyte layer provided between the cathode and the anode, wherein at least one of the cathode, the anode and the electrolyte layer comprises the solid electrolyte material according to the invention.

### Advantages of the invention

The present invention makes the best of the properties of so-called "multi-halide" solid electrolytes and of halide solid electrolytes incorporating Indium.

By "multi-halide" solid electrolytes, in the present text, it is referred to halide solid electrolytes comprising at least two halide anions and in particular to halide solid electrolytes comprising at least one chloride and at least one bromide. In other words, the chemical formula of the compounds of the invention comprises X_{6-y}X'_{y} wherein X and X' are two different halide anions chosen from fluoride, chloride, bromide and iodine, in particular X is chloride and X' is bromide.

Some multi-halide solid electrolytes are known for having the potential of possessing both a higher ionic conductivity and a better oxidative stability than their single-halide solid electrolytes counterparts.

Moreover, the inventors surprisingly discovered that implementing Indium in a multi-halide solid electrolyte also allowed to improve its stability towards water.

However, the mixing of the different elements necessary to obtain a solid electrolyte leads to a crystalline solid solution only for certain stoichiometries that constitute the present invention.

Said invention provides a cost-efficient solution, providing with halide solid electrolytes that are more easily implementable at the industrial scale because of their improved stability while still having a high ionic conductivity.

### Brief description of the drawings

Fig. 1 is an X-Ray Diffraction (XRD) pattern of the examples according to the invention, including from top to bottom: Li₃Y_{0.75}In_{0.25}Br₂Cl₄; Li₃Y_{0.80}In_{0.20}Br₂Cl₄; Li₃Y_{0.85}In_{0.15}Br₂Cl₄; Li₃Y_{0.90}In_{0.10}Br₂Cl₄ and Li₃Y_{0.85}In_{0.15}Br_{2.5}Cl_{3.5}. Fig. 1 also includes marks of peak positions for Li₃YBr₆.
Fig. 2 is an XRD pattern of the comparative examples herein synthetised, including from top to bottom: Li₃Y_{0.75}In_{0.25}BrCl₅; Li₃Y_{0.5}In_{0.5}BrCl₅; Li₃Y_{0.5}In_{0.5}Br₂Cl₄ and Li₃Y_{0.5}In_{0.5}Br₃Cl₃.

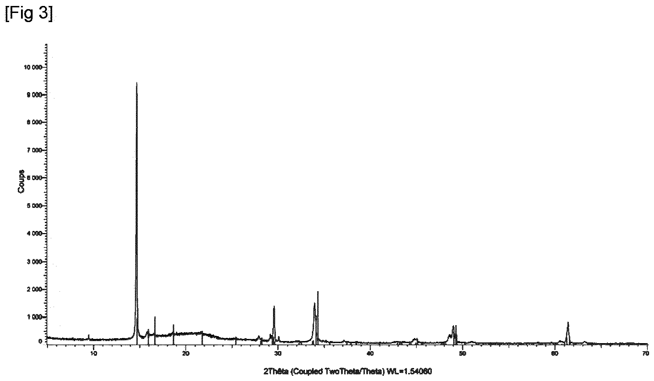

Fig. 3 is an XRD pattern of the reference herein synthetised: Li₃Y_{0.5}In_{0.5}Cl₆ wherein the peak positions corresponding to the crystalline structure of Li₃InCl₆ are superimposed as solid vertical lines.

### Detailed description of embodiments

A solid electrolyte material according to the invention is of formula (I):

M₃Me₁₋ₓInₓCl_{6-y}Br_{y} (I)

wherein M, Me, x and y are as defined in the present text.

In a particular embodiment, M can include Li, Na, K, Rb, Cs, or any combination thereof. For example, M can include at least one of Li and Na, or a combination thereof. In a further aspect, M can consist of at least one alkali metal element. For example, M can consist essentially of at least one alkali metal element chosen from the group consisting of Li, Na, K, Rb and Cs. In another example, M can consist of Li. In yet another example, M can consist of a combination of Li and at least one of Na, K, Rb and Cs. In still another example, M can consist of Na and at least one of Cs and Rb. In another example, M can consist of at least one of Na and Cs.

Preferably, M is Li.

In a particular embodiment, Me is a trivalent rare earth element that may be chosen from Y, Sc, Ce, Gd, Er, La, Yb and their combinations. In a further example, Me can be Al.

Preferably, Me is Y.

In some embodiments of the present invention, x ranges from 0.05 to 0.40, in particular from 0.07 to 0.35 and preferably from 0.10 to 0.30.

In preferred embodiments of the invention, x ranges from 0.10 to 0.25.

In other preferred embodiments of the invention, x is at least 0.015, in particular ranges from 0.015 to 0.50, preferably from 0.015 to 0.30.

According to the invention, x may be 0.1, 0.15, 0.2 or 0.25.

When x is greater than the upper end of the above-listed ranges, it is herein demonstrated that a single monophasic and pure compound could not be obtained for the corresponding formulae.

In some embodiments of the present invention, y ranges from 1.75 to 3.0, in particular from 1.50 to 3.50 and preferably from 2.0 to 3.50.

In preferred embodiments of the invention, y ranges from 2.0 to 2.5.

According to the invention, y may be 2 or 2.5.

When y is lower than the lower end of the above ranges, it is herein demonstrated that a single monophasic and pure compound could not be obtained for the corresponding formulae.

When y is greater than the upper end of the above-listed ranges, the electrochemical stability of the obtained compounds is not satisfactory. In particular, the oxidation onset of said compounds occurs at a lower tension and would thus impose a lower operating voltage for a battery comprising this material.

In a preferred embodiment of the present invention, the solid electrolyte material of formula (I) may be chosen from the group consisting of Li₃Y_{0.75}In_{0.25}Cl₄Br₂, Li₃Y_{0.8}In_{0.2}Cl₄Br₂, Li₃Y_{0.85}In_{0.15}Cl₄Br₂, Li₃Y_{0.9}In_{0.1}Cl₄Br₂, Li₃Y_{0.85}In_{0.15}Cl_{3.5}Br_{2.5} and Li₃Y_{0.985}In_{0.015}Cl₄Br₂, preferably chosen from the group consisting of Li₃Y_{0.75}In_{0.25}Cl₄Br₂, Li₃Y_{0.8}In_{0.2}Cl₄Br₂, Li₃Y_{0.85}In_{0.15}Cl₄Br₂, Li₃Y_{0.9}In_{0.1}Cl₄Br₂ and Li₃Y_{0.85}In_{0.15}Cl_{3.5}Br_{2.5}.

In another preferred embodiment of the present invention, the solid electrolyte material of formula (I) is Li₃Y_{0.985}In_{0.015}Cl₄Br₂.

For a solid electrolyte material according to the invention, the X-Ray Diffraction (XRD) pattern obtained using a Cu (K_{α} = 1.54060 nm) radiation source comprises at least one peak in each of the following 2θ ranges [13.7-14.7]; [28.2-29.2]; [32.4-33.4]; [46.9-47.9].

These ranges, represented in closed brackets, are meant to include their minimal and maximal values.

### Battery

A battery may be obtained using the solid electrolyte material according to the invention, assembled using techniques known by the person skilled in the art. In particular, said battery is an all-solid-state-battery. Such a battery forms part of the present invention.

Accordingly, the present invention pertains to a battery, in particular an all-solid-state battery, comprising a cathode, an anode and at least one electrolyte layer provided between the cathode and the anode, wherein at least one of the cathode, the anode and the electrolyte layer comprises the solid electrolyte material according to the invention.

Said battery comprises a cathode, an anode and at least one electrolyte layer. The electrolyte layer is provided between the cathode and the anode. At least one of the cathode, the anode and the electrolyte layer comprises the solid electrolyte material according to the invention.

In a battery according to the invention, the anode may comprise an anode active material.

The anode active material is a material capable of storing and releasing metal ions, in particular alkali metal ions such as Li or Na ions.

As the anode active material metals, carbon, oxides or nitrides may be used.

Metals suitable for use as an anode active material may be a single metal or an alloy such as lithium metal or a lithium alloy. Metals suitable for use as an anode active material may be chosen from silicon, tin, a silicon compound, a tin compound, lithium and a lithium alloy.

Examples of carbon suitable for use as an anode active material include natural graphite, coke, developing carbon, carbon fibres, spheroidal carbon, artificial graphite and amorphous carbon.

Accordingly, the anode active material may be chosen from
- oxides,
- nitrides,
- carbon such as natural graphite, coke, developing carbon, carbon fibres, spheroidal carbon, artificial graphite and amorphous carbon,
- metals such as silicon, tin, sodium or lithium, their compounds and their alloys,
in particular, the anode active material is chosen from silicon, tin, lithium, their compounds and their alloys such as LiₓIn_{y} wherein x ranges from 0 to 1 and y ranges from 0 to 1, preferably the anode active material is Li_{0.5}In.

The anode active material may be present in a battery according to the invention, in the form of particles. The median diameter of the anode active material particles may range from 0.1 µm to 100 µm. Preferably, the median diameter of the anode active material particles is larger than the median diameter of the sulphide solid electrolyte particles.

The thickness of the anode in a battery according to the invention may range from 10 µm to 500 µm.

In a battery according to the invention, the cathode may take the form of a cathode composite comprising a cathode active material.

Preferably, the cathode composite comprises the solid electrolyte according to the invention. In particular, the cathode may comprise particles comprising, preferably consisting in, the solid electrolyte according to the invention.

The cathode active material is a material capable of storing and releasing metal ions, in particular alkali metal ions such as Li or Na ions.

As cathode active materials transition metal fluorides, polyanionic materials, fluorinated polyanionic materials, transition metal sulphides, transition metal oxyfluorides, transition metal oxysulphides, transition metal oxynitrides, transition metal phosphates and lithium-containing transition metal oxide, doped or not, coated or not may be used. In particular, the cathode active material may be a transition metal oxide such as a lithium-cobalt oxide, a lithium-nickel-cobalt-aluminium oxide or a lithium-nickel-manganese-cobalt-oxide or a transition metal phosphate such as a lithium-iron phosphate, lithium-cobalt phosphate, lithium-nickel phosphates or lithium-manganese phosphates. Transition metal oxides suitable for use as a cathode active material may be, for example, LiNi_{0.6}Mn_{0.2}Co_{0.2}O₂, Li(NiCoAl)O₂ and LiCoO₂. Preferably, the cathode active material is the transition metal oxide of the formula LiNi_{0.6}Mn_{0.2}Co_{0.2}O₂. Alternatively, the cathode active material may be LiFePO₄.

The cathode active material may be present in battery according to the invention, in the form of particles. The median diameter of the anode active material particles may range from 0.1 µm to 100 µm.

The thickness of the anode in an ASSB or an assembly according to the invention may range from 10 µm to 500 µm.

In a battery according to the invention, a buffer layer may be deposited on at least one surface of the cathode, the anode or the electrolyte layer. Said buffer layer may comprise, in particular may consist in, a buffer material chosen from a lithium phosphate such as Li₃PO₄ or lithium phosphorus oxynitrides; lithium nitride; a NASICON such as LiTi₂(PO₄)₃; a perovskite such as (LaLi)TiO₃; a LISICON such as Li₁₄ZnGe₄O₁₆, Li₄SiO₄ or LiGeO₄; and a garnet such as Li₇La₃Zr₂O₁₂; preferably the buffer layer comprises, in particular consists in, Li₃PO₄.

In a battery according to the invention, at least one of the anode and the cathode may comprise an electron conductor compound chosen from natural or artificial graphite, graphene, carbon nano-tubes, acetylene black, Ketjen black, activated carbon, carbon fluoride, metal powders, conductive whiskers, conductive metal oxides, conductive polymers, metal fibres or carbon fibres, preferably the electron conductor is vapour grown carbon fibres.

### Preparation process

Generally, the solid electrolyte material according to the invention may be prepared from usual precursors by conventional techniques known by a person skilled in the art.

Specifically, the solid electrolyte material according to the invention may be prepared by a dry or liquid phase method.

In an embodiment, the solid electrolyte material according to the invention is obtained by a dry method.

In this embodiment, the precursors are, MCI, MBr, InCl₃ and MeCl₃, wherein M and Me are as defined herein above, preferably said precursors are LiCI, LiBr, InCl₃ and YCl₃.

Said precursors may be mixed in powder form in stoichiometric proportions.

The powder mixture may be heated at a temperature ranging from 200 °C to 800 °C, in particular from 400 °C to 700 °C and preferably from 500 °C to 650 °C, for a duration ranging from 1 hour to 100 hours, in particular from 10 hours to 80 hours and preferably from 20 hours to 60 hours.

Accordingly, a preparation process for the solid electrolyte material according to the invention comprises:
- mixing precursors such as MCI, MBr, InCl₃ and MeCl₃, in particular LiCI, LiBr, InCl₃ and YCl₃, in stoichiometric proportions, and
- heating the resulting mixture at a temperature ranging from 200 °C to 800 °C, in particular from 400 °C to 700 °C and preferably from 500 °C to 650 °C, for a duration ranging from 1 hour to 100 hours, in particular from 10 hours to 80 hours and preferably from 20 hours to 60 hours.

In an alternative embodiment, the solid electrolyte material according to the invention is obtained by a liquid phase method.

According to this embodiment, (NH₄)₃Me₁₋ₓInₓCl_{6-y}Br_{y}, MCI and MBr are formed from a reaction mixture including a medium chosen from aqueous, alcoholic or other polar molecule liquid solution and precursors including ammonium halide, NH₄Cl, NH₄Br, one or more Me metal compounds, one or more In metal compounds, one or more M metal compounds, or any combination thereof, wherein Me, M, x and y are as defined herein above.

The metal compounds can be in the form of oxide, carbonate, sulfide, sulfate, hydrate, hydroxide, oxalate, acetate, nitrate or any combination thereof.

In particular, the Me and In metal compounds can include oxides of formula In₂O₃ and/or Me₂O₃, such as Y₂O₃.

In particular, the M metal compound can include a carbonate, such as lithium carbonate, sodium carbonate, cesium carbonate, or a combination thereof. Preferably the M metal compound is lithium carbonate.

The M metal compound may include halide such as LiCI, LiBr, NaCl, NaBr, CsCI and CsBr.

The precursors may further include an acid to facilitate the acidic synthesis in the medium.

Said precursors are introduced in stoichiometric proportions in the medium.

In a particular embodiment, a reaction mixture may be formed in water, including NH₄Cl, NH₄Br, Y₂O₃, In₂O₃, at least one lithium metal compound chosen from lithium carbonate (Li₂CO₃) and lithium halide, in particular LiCI and/or LiBr, preferably LiCI, and hydrochloric (HCl) and/or hydrobromic acid (HBr).

Said reaction mixture leads to a mixture of reaction products, which are, as mentioned above (NH₄)₃Me₁₋ₓInₓCl_{6-y}Br_{y}, MCI and MBr.

Said mixture of reaction products may be dried to facilitate the solid-state reaction between the reaction products. Drying may be performed in air or dry air and/or under vacuum or reduced pressure, such as 100 mbar, 40 mbar, 1 mbar, or even 0.01 mbar. N₂ or Ar flow may be used to facilitate the removal of water. Heat may be applied to facilitate the evaporation of water. The heating temperature can range from 100 °C to 160 °C. Drying may be conducted until a trace amount of water is left in the mixture, such as from 1 wt% to 3 wt%.

Said reaction products lead to the resulting solid-state solution (NH₄)₃M₃Me₁₋ₓInₓCl_{6-y+3z}Br_{y+3z'}, wherein z + z' = 1.

The solid electrolyte material of the invention may be obtained from the solid-state solution by decomposition of the ammonium halide.

The solid-state solution may be heated to a temperature ranging from 150 °C to 800 °C, in particular from 250 °C to 700 °C and preferably from 300 °C to 650 °C, to allow the sublimation of ammonium halides of formulae NH₄Cl, NH₄Br and/or NH₄Cl_{z}Br_{z'}.

The heating temperature can be selected based on the composition of the solid-state solution. For example, for a solid-state solution that is relatively volatile, the heating temperature can be relatively low. In another example, the heating temperature may be at least 150 °C lower than the melting temperature, and/or at most 50 °C above the melting temperature of the solid-state solution.

Heating may be carried out in a crucible made of a material that is inert to the reactants and products. For example, the crucible may be made of quartz, alumina, silica-alumina, BN, glassy carbon, or graphite such as graphite having a pyrolytic carbon coating. Heating may be conducted in a dry and neutral atmosphere, such as air or dry air. An inert gas, such as N₂ or Ar, may be used to facilitate the process. Heating may be performed for at least 15 minutes to at most 12 hours, in particular from 30 minutes to 10 hours and preferably from 1 hour to 5 hours.

Sublimation of the ammonium halides may be monitored by collecting and waiting the escaped ammonium halides. In particular, the sublimation can be complete such that the solid electrolyte material of formula (I) is essentially free of ammonium halide.

Finally, cooling may be performed, for example in air, dry air, or in a N₂ atmosphere. Said cooling may be performed at a temperature below 200 °C, for example of at most 100 °C, in particular at a temperature of at most 70 °C, preferably of at most 50 °C, even more preferably of at most 30 °C. Preferably, said cooling is performed at room temperature (from 20 to 25 °C). Optionally, said cooling is assisted with a flow of Ar or N₂. Said cooling may be performed at a cooling rate ranging from 10 to 100 °C/min.

Care should be taken to carefully control the number of oxygen-containing species (e.g., oxides, hydroxides, and/or moisture) that can be present in the process of forming the solid electrolyte material of the invention. Oxygen-containing species in excess can cause the formation of impurity phases that can reduce certain performance of a battery component formed using the solid electrolyte material, such as ionic conductivity. For instance, the solid-state reaction or melt reaction can be carried out under a neutral atmosphere with a limited content of moisture or oxygen level lower than 10 ppm. In a further example, the initial amount of halide compounds, such as acids or ammonium halides, may be higher than the stoichiometric amount based on the theoretical chemical balance equation (such as at least 10% more) to ensure the yield of complex halide materials and reduce the level of oxygen-containing phases originated from metal oxide or metal carbonate raw materials to below the detectable level by XRD.

Accordingly, a preparation process for the solid electrolyte material according to the invention comprises:
- in a medium chosen from aqueous, alcoholic or other polar molecule liquid solution, mixing precursors including ammonium halide, NH₄Cl, NH₄Br, one or more Me metal compounds, one or more In metal compounds, one or more M metal compounds, in stoichiometric proportions,
- drying the mixture to obtain a solid-state solution of formula (NH₄)₃M₃Me₁₋ₓInₓCl_{6-y+3z}Br_{y+3z'}, wherein z + z' = 1, and
- heating the solid-state solution at a temperature ranging from 150 °C to 800 °C, in particular from 250 °C to 700 °C and preferably from 300 °C to 650 °C, for a duration ranging from 15 minutes to 12 hours, in particular from 30 minutes to 10 hours and preferably from 1 hour to 5 hours.

### Examples

### Synthesis of Halide Solid Electrolytes

**Table 1: Mass of the precursors used for the synthesis of different halide solid electrolytes**

| | LiC (g) l | LiBr (g) | InCl₃ (g) | YCl₃ (g) | YBr₃ (g) | Formula |
|---|---|---|---|---|---|---|
| Example 1 | 0.51 | 2.08 | 0.66 | 1.75 | - | Li₃Y_{0.75}In_{0.25}Br₂Cl₄ |
| Example 2 | 0.51 | 2.09 | 0.53 | 1.88 | - | Li₃Y_{0.8}In_{0.2}Br₂Cl₄ |
| Example 3 | 0.51 | 2.09 | 0.40 | 2.00 | - | Li₃Y_{0.85}In_{0.15}Br₂Cl₄ |
| Example 4 | 0.51 | 2.10 | 0.27 | 2.12 | - | Li₃Y_{0.9}In_{0.1}Br₂Cl₄ |
| Example 5 | 0.24 | 2.48 | 0.38 | 1.90 | - | Li₃Y_{0.85}In_{0.15}Br_{2.5}Cl_{3.5} |
| Comparative Example 1 | 0.50 | 2.05 | 1.30 | 1.15 | - | Li₃Y_{0.5}In_{0.5}Br₂Cl₄ |
| Comparative Example 2 | 1.12 | 1.14 | 1.46 | 1.29 | - | Li₃Y_{0.5}In_{0.5}BrCl₅ |
| Comparative Example 3 | 1.14 | 1.16 | 0.74 | 1.96 | - | Li₃Y_{0.75}In_{0.25}BrCl₅ |
| Comparative Example 4 | 0.68 | 1.39 | 1.18 | - | 1.75 | Li₃Y_{0.5}In_{0.5}Br₃Cl₃ |
| Reference | 1.90 | - | 1.65 | 1.46 | - | Li₃Y_{0,5}In_{0.5}Cl₆ |

The halides solid electrolytes represented in the last column of the Table 1 herein above were synthesized by weighting the masses of precursors chosen from LiCI, LiBr, InCl₃, YCl₃ and YBr₃ according to the corresponding lines in said Table.

Said precursors were, for each synthesis, introduced into a mortar and ground by hand with a pestle for 15 min. The resulting grinding powder was then placed into a quartz ampoule and sealed under high vacuum at 10⁻² mBar. The sealed ampoule was placed in a box furnace at 600 °C for 30 hours. After this heat treatment, the ampoule was opened in a glove box filled with nitrogen to collect the resulting halide solid electrolyte powder.

Said powder was sampled for XRD analysis.

### XRD analysis

XRD analysis was carried on with a Cu (K_{α} = 1. 54060 nm) source in a Bruker D2 Phaser diffractometer.

Li₃Y_{0.5}In_{0.5}Cl₆ was synthetised as a reference and its XRD pattern indicates a pure compound. The comparison with Li₃InCl₆ peaks position demonstrates that these compounds are not identical and, as a result, that the Y is clearly incorporated into the synthetised compound.

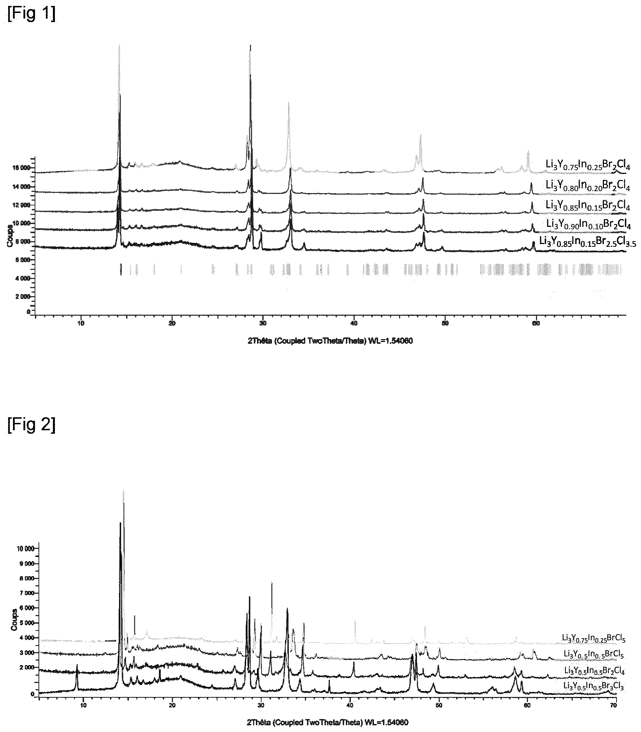

Fig. 1 also displays XRD patterns, with peak positions similar to Li₃YBr₆ (*C*2/m space group) wherein only the lattice parameter varies. These patterns correspond to pure compounds.

On the other hand, Fig. 2 shows XRD patterns corresponding to the comparative examples wherein the diffractograms were compared to databases without finding matches for a pure phase. Furthermore, the correspondence of a single phase with the diffractograms was refuted using a dichotomous unit cell search via the DICVOL software.

In conclusion, as demonstrated by the XRD patterns, compounds of formula (I) according to the invention were able to be obtained as pure compounds whereas compounds not corresponding to the parameters of this formula resulted in mixes of different phases and could not be obtained.

## Claims

1. A solid electrolyte material of formula (I):
M₃Me₁₋ₓInₓCl_{6-y}Br_{y} (I)
wherein
M comprises an alkali metal element, in particular including Li,
Me is a trivalent element chosen from Y, Al, Sc, La, Ce, Gd, Er and Yb,
x is greater than 0 and lower than 0.50, and
y is greater than 1.0 and lower than 3.0.

2. The solid electrolyte material according to the preceding claim wherein M is Li.

3. The solid electrolyte material according to any of the preceding claims wherein Me is Y.

4. The solid electrolyte material according to any of the preceding claims wherein x ranges from 0.05 to 0.40, in particular from 0.07 to 0.35 and preferably from 0.10 to 0.30.

5. The solid electrolyte material according to any of the preceding claims wherein x ranges from 0.10 to 0.25.

6. The solid electrolyte material according to any of the preceding claims wherein y ranges from 1.75 to 3.0, in particular from 1.50 to 3.50 and preferably from 2.0 to 3.50.

7. The solid electrolyte material according to any of the preceding claims wherein y ranges from 2.0 to 2.5.

8. The solid electrolyte material according to any of the preceding claims wherein the X-ray diffraction pattern obtained using a Cu (K_{α} = 1.54060 nm) radiation source comprises at least one peak in each of the following 2θ ranges [13.7-14.7]; [28.2-29.2]; [32.4-33.4]; [46.9-47.9].

9. The solid electrolyte material according to any of the preceding claims, wherein the formula (I) is chosen from the group consisting of Li₃Y_{0.75}In_{0.25}Cl₄Br₂, Li₃Y_{0.8}In_{0.2}Cl₄Br₂, Li₃Y_{0.85}In_{0.15}Cl₄Br₂, Li₃Y_{0.9}In_{0.1}Cl₄Br₂, Li₃Y_{0.85}In_{0.15}Cl_{3.5}Br_{2.5} and Li₃Y_{0.985}In_{0.015}Cl₄Br₂, preferably chosen from the group consisting of Li₃Y_{0.75}In_{0.25}Cl₄Br₂, Li₃Y_{0.8}In_{0.2}Cl₄Br₂, Li₃Y_{0.85}In_{0.15}Cl₄Br₂, Li₃Y_{0.9}In_{0.1}Cl₄Br₂ and Li₃Y_{0.85}In_{0.15}Cl_{3.5}Br_{2.5}.

10. A preparation process for the solid electrolyte material according to any of the preceding claims comprising:
- mixing precursors such as MCI, MBr, InCl₃ and MeCl₃, in particular LiCI, LiBr, InCl₃ and YCl₃, in stoichiometric proportions, and
- heating the resulting mixture at a temperature ranging from 200 °C to 800 °C, in particular from 400 °C to 700 °C and preferably from 500 °C to 650 °C, for a duration ranging from 1 hour to 100 hours, in particular from 10 hours to 80 hours and preferably from 20 hours to 60 hours.

11. A preparation process for the solid electrolyte material according to any of claims 1 to 9 comprising:
- in a medium chosen from aqueous, alcoholic or other polar molecule liquid solution, mixing precursors including ammonium halide, NH₄Cl, NH₄Br, one or more Me metal compounds, one or more In metal compounds, one or more M metal compounds, in stoichiometric proportions,
- drying the mixture to obtain a solid-state solution of formula (NH₄)₃M₃Me₁₋ₓInₓCl_{6-y+3z}Br_{y+3z'}, wherein z + z' = 1, and
- heating the solid-state solution at a temperature ranging from 150 °C to 800 °C, in particular from 250 °C to 700 °C and preferably from 300 °C to 650 °C, for a duration ranging from 15 minutes to 12 hours, in particular from 30 minutes to 10 hours and preferably from 1 hour to 5 hours.

12. A preparation process according to the preceding claim, wherein the medium is water and the precursors are NH₄Cl, NH₄Br, Y₂O₃, In₂O₃, and at least one lithium metal compound chosen from Li₂CO₃ and lithium halide, in particular LiCI and/or LiBr, preferably LiCI, and HCl and/or HBr.

13. A battery, in particular an all-solid-state battery, comprising a cathode, an anode and at least one electrolyte layer provided between the cathode and the anode, wherein at least one of the cathode, the anode and the electrolyte layer comprises the solid electrolyte material according to any of claims 1 to 9.
